(19) Europäisches Patentamt
European Patent Office
Office européen des brevets

(11) **EP 4 343 225 A1**

(12) **DEMANDE DE BREVET EUROPEEN**

(43) Date de publication:
**27.03.2024 Bulletin 2024/13**

(21) Numéro de dépôt: **23199233.0**

(22) Date de dépôt: **22.09.2023**

(51) Classification Internationale des Brevets (IPC):
*F24S 10/50* (2018.01)   *F24S 25/20* (2018.01)
*F24S 50/40* (2018.01)   *F24S 70/60* (2018.01)
*F24S 80/40* (2018.01)   *F24S 80/58* (2018.01)
*F24S 80/65* (2018.01)   *F24S 80/00* (2018.01)

(52) Classification Coopérative des Brevets (CPC):
**F24S 10/50; F24S 25/20; F24S 50/40; F24S 70/60;
F24S 80/40; F24S 80/58; F24S 80/65;**
F24S 2080/017; F24S 2080/018

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité:  **26.09.2022  FR 2209750**

(71) Demandeur: **Boisurel**
**31150 Lespinasse (FR)**

(72) Inventeurs:
• **SORIA, Antonin**
**31700 BLAGNAC (FR)**
• **ROUX, Benoît**
**31460 CARAMAN (FR)**

(74) Mandataire: **Bringer IP**
**1, Place du Président Thomas Wilson**
**31000 Toulouse (FR)**

(54)   **PANNEAU SOLAIRE AEROTHERMIQUE AVEC ISOLANT VEGETAL**

(57)   Panneau solaire aérothermique plan comporte un cadre (100) rigide agencé à sa périphérie, entourant une enceinte (1) comprenant successivement à distance les unes des autres, les pièces consistant en :
- une vitre (2) en matériau transparent à la lumière formant une paroi avant,
- un absorbeur (3) calorique formé d'un feuillet métallique,
- une strate isolante (4) formant une paroi arrière,
ladite enceinte (1) étant dotée de parois latérales formées par des cloisons (5) s'élevant depuis le pourtour de la strate isolante (4) avec laquelle elles sont solidaires, lesdites cloisons (5) comprenant des moyens de maintien de la vitre (2) et de l'absorbeur (3) à une distance fixe prédéterminée de la strate isolante (4), et ladite strate isolante et lesdites cloisons comprenant au moins un matériau isolant d'origine végétale.

Le matériau isolant peut être du liège naturel, du liège expansé, ou un assemblage de ceux-ci.

Fig. 3

**Description**

La présente invention appartient au domaine des techniques de captage de l'énergie solaire, et plus particulièrement au domaine des panneaux solaires thermiques.

Elle a pour objet un panneau solaire aérothermique utilisé pour le chauffage d'un bâtiment, ayant des performances améliorées grâce à une enceinte dont le fond et les parois latérales sont isolés thermiquement par un matériau d'origine végétale.

La réduction de la consommation d'énergie est un impératif désormais reconnu de tous et de nombreux systèmes sont proposés pour économiser les ressources, parmi lesquelles on trouve les technologies utilisant l'énergie solaire. Les plus répandues reposent sur la transformation du rayonnement solaire en énergie électrique par le biais de panneaux photovoltaïques. Plus rarement mentionnées, les technologies mettant en oeuvre des capteurs solaires thermiques visent à absorber l'énergie solaire sous forme de chaleur, laquelle est communiquée à un fluide caloporteur. Il est connu d'intégrer de tels capteurs dans une enceinte close pour constituer des panneaux solaires thermiques qui peuvent être installés de manière fixe ou orientable sur un bâtiment à chauffer, ou à proximité directe de celui-ci.

Un panneau thermique comporte communément une vitre transparente à travers laquelle les rayons du soleil pénètrent dans le panneau, un organe collecteur qui transforme le rayonnement solaire en chaleur et le transmet à un fluide caloporteur, et un fond isolant pour éviter les déperditions thermiques. Le panneau est doté d'une entrée et d'une sortie permettant la circulation du fluide caloporteur. Lorsque le panneau est exposé au soleil, le collecteur s'échauffe grâce à l'apport d'énergie dû au rayonnement (lumière visible, UV, infrarouges principalement). Le fluide caloporteur circulant dans le panneau récupère l'énergie calorique pour la transférer à un local à chauffer. Il existe plusieurs sortes de capteurs thermiques, parmi lesquels les capteurs vitrés sont les plus courants dans le secteur résidentiel, tandis que les capteurs non vitrés sont utilisés pour le chauffage des piscines, et les capteurs tubulaires sous vide sont dédiés à des applications dans des conditions extrêmes.

Les panneaux solaires thermiques sont en majorité utilisés pour produire de l'eau chaude sanitaire. Ils fonctionnent avec un fluide caloporteur liquide, par exemple de l'eau, des mélanges eau-glycol, ou autres. Ils peuvent dans certains cas aussi alimenter un circuit de chauffage domestique. La fabrication de ces systèmes est onéreuse et leur installation requiert des aménagements importants des bâtiments. C'est pourquoi, leur emploi est préconisé pour des logements ou des locaux de service occupés en permanence, les économies d'énergie réalisées étant dans ce cas à même de justifier les dépenses initiales d'équipement.

Les panneaux solaires dans lesquels le fluide caloporteur est de l'air, aussi appelés panneaux aérothermiques, sont moins répandus. Ils offrent cependant de nombreux avantages. Ils ont un fonctionnement simple dans la mesure où le fluide caloporteur est l'air ambiant chauffé par contact direct avec une plaque faisant fonction d'absorbeur, avant d'être injecté dans le réseau de chauffage du bâtiment. Ils sont plus faciles à fabriquer que les panneaux à eau, leur pose sur les bâtiments est simple et leur entretien peu contraignant. En particulier, ils n'imposent pas l'emploi d'antigel ou un dispositif d'auto-vidange pour être protégés du gel, contrairement aux systèmes à eau. Avec un coût de fabrication modéré, ce type de panneau solaire est intéressant, en particulier pour maintenir une atmosphère tempérée et réduire l'humidité dans les logements occupés de manière intermittente, ou en complément des autres modes de chauffage, notamment à la mi-saison. Dans le contexte de la transition écologique et du développement des énergies renouvelables, ces panneaux solaires aérothermiques sont destinés à être de plus en plus employés.

Différents modèles de panneaux aérothermiques ont été proposés, avec des variantes destinées à optimiser leurs performances. En premier lieu, l'air étant un fluide caloporteur moins performant que l'eau, des efforts ont été faits pour favoriser le transfert calorique. Une solution est d'augmenter la durée et/ou la longueur de son parcours à l'intérieur du capteur, pour lui permettre d'accumuler un maximum de chaleur. Pour ce faire, l'intérieur du capteur peut comporter des obstacles physiques obligeant l'air à faire des détours.

Par exemple, le document FR 2 865 269 décrit un capteur solaire à air formé d'un caisson comportant une plaque de fond faisant fonction d'absorbeur et une vitre transparente entre lesquels de l'air circule en suivant un cheminement imposé par des cloisons métalliques disposées en chicane. La circulation prolongée du gaz le long des cloisons favorise le transfert de chaleur. Une plaque isolante en mousse polyuréthane est accolée sous l'absorbeur. Cependant, l'air chaud étant en contact avec la vitre, une partie des calories est rendue à l'extérieur. Face à cet inconvénient, le document FR 2 975 759 propose un capteur solaire à circulation d'air comportant une paroi absorbante placée entre la vitre et le fond du caisson de sorte à délimiter deux compartiments et à créer d'une part une lame d'air immobile isolante et d'autre part un volume dans lequel l'air à chauffer circule. Aucune isolation du caisson n'est envisagée. Le document FR 3 098 572 préconise de son côté un capteur solaire thermique comportant une enceinte hermétique remplie d'air stagnant, délimitée par l'absorbeur et la vitre solidarisés entre eux. L'absorbeur présente un fond prolongé par des parois latérales ce qui permet d'augmenter la surface d'exposition de l'absorbeur, et ce faisant le rendement thermique.

Par ailleurs, il a été recherché des structures faciles à assembler. Dans ce but, la plupart des panneaux connus sont conçus à partir d'une structure en caisson, dont le fond est entouré de parois latérales, formées de profilés adjoints, ou réalisées d'un seul tenant par formage d'une plaque de métal. FR 2 908 870 décrit une telle configuration, et propose en outre un élément transparent ayant une section transversale en U renversé dont les ailes coiffent au moins l'ensemble absorbeur. L'ensemble absorbeur est généralement placé au-dessus d'un isolant disposé dans le fond du caisson.

Finalement, quels que soient la structure et l'agencement retenus pour les panneaux à air actuellement disponibles, il est nécessaire d'utiliser différentes pièces de fixation pour maintenir ensemble l'absorbeur, le vitrage et le fond du panneau, ce qui complexifie leur assemblage, allonge le temps d'assemblage et les coûts de fabrication.

Aucune de ces approches ne prend en compte la déperdition calorique se produisant par les bordures latérales des panneaux. Or, les bordures représentent une surface d'échange non négligeable. En effet, pour un panneau carré de 1 m$^2$, ayant une épaisseur de 12 cm, la surface latérale du pourtour est de 0,48 m$^2$, soit d'environ la moitié de la surface du panneau. Pour un panneau rectangulaire de 2 m$^2$ et de 10 cm d'épaisseur, la surface latérale est encore de de 0,6 m$^2$, soit 0,3 m$^2$ par m$^2$ de surface frontale. Les parois latérales constituent ainsi des zones d'échange thermique dont la présence affecte significativement l'efficacité du panneau. Certes, le document FR 2 975 759 décrit l'utilisation de pièces en matière plastique thermiquement isolante pour la fixation de la paroi mince jouant le rôle d'absorbeur à la paroi du caisson, de façon à créer une rupture de pont thermique. Néanmoins, aucune disposition d'isolation des bordures du panneau dans leur ensemble n'est envisagée.

En outre, les matériaux utilisés comme isolant en fond de panneau sont des matériaux de synthèse, tels des polymères susceptibles d'émettre des composés des organiques volatils toxiques (COV) ayant un impact négatif sur la santé, en quantité d'autant plus grande que la température est élevée dans le panneau solaire. Or, ces composés vont être diffusés dans l'atmosphère, notamment dans le local chauffé, et inhalés par les personnes s'y trouvant.

Au-delà, c'est l'emploi de matériaux synthétiques qui doit être remis en cause, au regard des nouvelles normes visant à réduire l'empreinte environnementale des constructions. La recherche de solutions alternatives aux matériaux conventionnels doit désormais s'inscrire dans le cadre d'une démarche globale de développement durable tant au niveau de ses composants, de sa fabrication, de sa mise en oeuvre et de son recyclage. Les modèles de panneaux aérothermiques actuellement proposés sont sous plusieurs aspects en contradiction avec les préoccupations environnementales.

La présente invention a pour but de remédier aux inconvénients des systèmes existants et de répondre aux objectifs exposés ci-dessus. Elle propose pour ce faire un panneau solaire à air dans lequel une structure isolante est présente tant au niveau du fond que des parois latérales, cette structure étant réalisée avec un matériau d'origine végétale. Elle apporte une surface thermiquement isolée étendue avec un matériau biosourcé, qui assure en même temps le maintien de l'absorbeur et du vitrage frontal. Les éléments constitutifs sont enserrés dans un cadre les maintenant solidaires entre eux. Cette configuration, permise par l'emploi d'un isolant biosourcé et sain, assure un rendement thermique accru du panneau, tout en réduisant le nombre de pièces à assembler. Elle permet également de diminuer l'épaisseur du panneau, le rendant plus esthétique sur une façade ou un toit. Il est précisé que dans ce qui suit et sauf indication différente, les termes isolant et isolation, concernent l'aspect thermique.

Plus précisément, l'invention a pour objet un panneau solaire aérothermique plan doté de moyens de fixation à un bâtiment à chauffer, comportant un cadre rigide agencé en périphérie du panneau, et entourant une enceinte comprenant successivement de l'avant vers l'arrière et à distance les unes des autres, les pièces consistant en :

- une vitre en matériau transparent à la lumière formant une paroi avant,
- un absorbeur calorique formé d'un feuillet métallique,
- une strate isolante formant une paroi arrière,

l'enceinte étant dotée de parois latérales formées par des cloisons s'élevant depuis le pourtour de la strate isolante, avec laquelle elles sont solidaires, lesdites cloisons comprenant des moyens de maintien de la vitre transparente et de l'absorbeur à une distance fixe prédéterminée de la strate isolante, et ladite strate isolante et lesdites cloisons étant constituées d'au moins un matériau isolant d'origine végétale.

Le panneau solaire selon l'invention est destiné à équiper un bâtiment, en vue de chauffer ses espaces intérieurs, et subsidiairement de les rafraichir et d'assurer leur aération, comme il sera exposé plus loin. Les bâtiments concernés peuvent être de tout type, notamment des logements, immeubles ou maisons individuelles, des locaux d'activité appartenant aux secteurs industriels, commerciaux ou administratifs, pouvant recevoir du public comme des écoles, des crèches, etc. Ils peuvent être occupés de manière intermittente ou continue au fil des mois ou au cours d'un cycle circadien. Ils présentent une façade ou un pan de toiture ayant une exposition vers le sud, et si possible plein sud, de manière à offrir au panneau une exposition maximale au soleil. Le panneau sera fixé au bâtiment par des moyens connus en eux-mêmes, par exemple à l'aide de crochets qui seront vissés sur des rails préalablement installés sur la façade ou le toit à équiper.

Le panneau solaire selon l'invention est du type vitré plan, typiquement carré ou rectangulaire. Dans la description qui va suivre, on considérera le panneau solaire tel qu'il se présente une fois en place, avec une face arrière tournée vers le bâtiment auquel il est fixé, et une face avant tournée vers l'espace environnant, les faces avant et arrière étant inscrites dans des plans parallèles entre eux. Le cadre rigide agencé en périphérie du panneau, comporte quatre bords latéraux qui seront respectivement le bord de droite, de gauche, supérieur et inférieur. Le cadre est qualifié de rigide dans la mesure où il est apte à résister aux déformations et à maintenir la structure du panneau dans la conformation prévue et adaptée à son usage.

Le cadre entoure une enceinte dans laquelle se déroule le processus de captage et de transfert de l'énergie calorique. Elle est distincte du cadre et comprend à l'avant, une vitre en matériau transparent à la lumière formant une paroi avant de ladite enceinte. A noter qu'elle est également la paroi avant du panneau, abstraction faite de l'épaisseur du cadre. La vitre peut être réalisée en tout matériau laissant passer la lumière solaire sans pâtir du rayonnement reçu ni de la chaleur générée (notamment déformation et ternissement). Elle peut être en verre, en polymère de synthèse type polycarbonate, ou autre. On préfèrera autant que possible une vitre en verre trempé, assurant stabilité physico-chimique et sécurité.

Sous la vitre et à distance de celle-ci, se trouve un absorbeur calorique. Il est connu d'employer une plaque en métal ayant une conductivité thermique élevée, traitée pour absorber la lumière en s'échauffant. On utilise de préférence une plaque mince, par exemple un feuillet d'aluminium, revêtu d'une laque noire et mate ou d'un revêtement absorbant sélectif, ou traité par un dépôt galvanique, permettant de recueillir la chaleur résultant du rayonnement solaires.

Ce feuillet peut être plan ou présenter des reliefs plus ou moins prononcés, de type pliures, ondulations, creux et saillies ou autres aspérités. De préférence, l'absorbeur adopte la conformation d'un feuillet plan, simple à mettre en oeuvre et n'ajoutant pas d'épaisseur à l'ensemble. La vitre et l'absorbeur sont placés à distance l'un de l'autre, c'est-à-dire avec un certain écartement, et l'espace situé entre eux constitue une chambre de captage de l'énergie lumineuse ayant traversé la vitre, qui est absorbée sous forme de chaleur par le feuillet métallique. Cette chaleur va être récupérée par l'air se déplaçant au contact de l'absorbeur, dans une chambre de circulation ménagée entre celui-ci et une structure isolante.

En effet, en arrière de l'absorbeur et à distance de celui-ci, se trouve une strate isolante qui forme la paroi arrière de l'enceinte (et également la paroi arrière du panneau, abstraction faite de l'épaisseur du cadre). Par strate isolante, on entend une structure simple ou composite, apte à isoler au moins thermiquement le compartiment qu'elle délimite. De manière originale, l'enceinte est dotée de parois latérales matérialisées par des cloisons s'élevant depuis le pourtour de la strate isolante, qui ont également des propriétés d'isolation thermique. La strate isolante et les cloisons sont solidaires entre elles et créant ainsi une structure isolante continue. Les cloisons sont commodément orientées perpendiculairement au plan de ladite strate et forment ensemble une chambre de circulation de l'air, fermée à l'avant par l'absorbeur. Cet agencement permet d'utiliser la chaleur générée par l'absorbeur avec un haut rendement, sans déperdition significative, ni vers l'arrière, ni par les côtés. Les éléments isolants (strate isolante et cloisons) étant directement en contact avec la chambre de circulation et donc soumis à des températures élevées durant le fonctionnement du panneau solaire, il est essentiel d'éviter toute émanation de composés volatils et de ce fait l'emploi de matériaux de synthèse habituellement employés comme isolant, est ici proscrit.

Selon une caractéristique de l'invention, les cloisons comprennent des moyens de maintien de la vitre transparente à une distance fixe prédéterminée de la strate isolante, et par conséquent également à une certaine distance du feuillet absorbeur. Cette dernière distance correspond à la profondeur de la chambre de captage. Selon une approche similaire, les cloisons du panneau solaire comprennent des moyens de maintien de l'absorbeur à une distance fixe prédéterminée de la strate isolante, et par conséquent également à une certaine distance de la vitre à l'avant du panneau. Ainsi, des éléments faisant fonction d'isolant latéral de l'enceinte assurent aussi le bon positionnement de la vitre à l'avant du panneau et de l'absorbeur.

Lesdites distances sont déterminées lors de la conception du panneau dont elles impactent le bon fonctionnement, puisqu'elles correspondent respectivement à la profondeur de la chambre de circulation et à celle de la chambre de captage. A titre d'exemple, la chambre de circulation délimitée par la strate isolante et le feuillet absorbeur peut avoir une profondeur de 20 mm à 30 mm, tandis que le feuillet absorbeur et la vitre délimitent une chambre de captage de 4 mm à 6 mm de profondeur.

Il est apparu que des matériaux faits à partir de liège étaient à même de répondre à cet objectif, du fait de leurs multiples propriétés les rendant compatibles avec l'application visée, voire même offrant des avantages inattendus. En effet, le liège est une matière totalement naturelle, renouvelable, biodégradable et non allergène. En même temps, il possède des caractéristiques appréciables pour son emploi dans des panneaux solaires : il est incompressible, imputrescible, imperméable aux liquides, résistant et léger. Il est surtout isolant thermique et acoustique, et possède en outre une bonne inertie thermique permettant d'atténuer les variations de température. Il offre une durabilité extrême, car il résiste au gel, aux rongeurs et aux insectes.

On peut l'utiliser à l'état de blocs, mais il est plus avantageux de le broyer pour obtenir un granulat qui peut ensuite être compressé en plaques prêtes à l'usage ou pouvant être découpées aux dimensions désirées. Il est important de souligner que c'est la sève du liège, riche en subérine, qui permet l'agglomération des particules sans adjonction de colle ni d'aucun liant supplémentaire.

On distingue deux types de liège : le liège naturel ou liège blanc, et le liège expansé aussi appelé liège noir. Le liège naturel ne subit aucun traitement, hormis un ébouillantage après récolte. Le liège expansé est obtenu par un procédé qui consiste à chauffer à la vapeur d'eau des granulés de liège qui se gonflent alors d'air et se soudent en un bloc compact. Dans la présente invention, il est possible d'utiliser l'un de ces deux types de liège en tant que matériau isolant. On peut aussi les combiner dans un matériau composite, par exemple en intercalant des couches successives de l'un et l'autre, ou en toute autre combinaison. On évitera cependant l'emploi de liège expansé en surface des éléments isolants, car il a tendance à émettre des poussières qui pourraient être diffusées dans les bâtiments et inhalées.

Ainsi, selon une caractéristique préférée du panneau objet de l'invention, ledit au moins un matériau isolant de ladite strate isolante et desdites cloisons est choisi parmi du liège naturel, du liège expansé ou un assemblage de ceux-ci. De la sorte, la chambre de circulation est délimitée en grande partie par un matériau sain et biosourcé, tout en répondant parfaitement aux exigences techniques attendues pour des panneaux solaires.

Selon une caractéristique avantageuse de l'invention, la strate isolante formant la paroi arrière de l'enceinte (et du panneau) comprend une plaque support rigide contre laquelle prend appui une couche dudit matériau isolant. La plaque support permet de protéger sa face externe des dégradations mécaniques et également de soutenir par l'arrière la couche de matériau isolant, de rigidifier la paroi arrière. La présence de cette plaque présente un autre intérêt lié au mode d'assemblage du panneau. En effet, comme il sera détaillé plus loin, le cadre périphérique maintient les pièces formant l'enceinte solidaires entre elles par serrage entre des mâchoires : les zones sur lesquelles s'exerce la pression des mâchoires doivent opposer une résistance à l'écrasement suffisante, qui fait défaut à une simple couche de liège aggloméré. La plaque support doit être peu épaisse pour limiter l'encombrement, mais assez rigide pour éviter que la couche de liège ou autre matériau isolant qu'elle renforce puisse s'infléchir. Elle peut être faite en une matière synthétique, dans la mesure où elle n'est pas soumise à de fortes températures, étant séparée de la chambre de circulation chaude par la couche isolante. On peut ainsi avoir recours à une plaque de PVC (polychlorure de vinyle) d'une épaisseur de l'ordre du millimètre, contre laquelle est apposée un couche de liège d'une épaisseur pouvant aller d'un à plusieurs centimètres, comprise par exemple entre 1,5 cm et 3 cm.

Les panneaux ayant généralement un surface supérieure à un m², la rigidité du panneau peut être utilement accrue à l'aide de barres transversales fixées à la paroi arrière, soit à l'extérieur du panneau, soit de manière originale à l'intérieur, par assemblage dans l'épaisseur de la strate isolante formant la paroi arrière, d'un élément long et fin, tel qu'une latte en métal.

Selon une modalité particulière de l'invention, la strate isolante peut ainsi comprendre au moins une latte de renfort placée entre la plaque support et la couche de matériau isolant. La rigidité apportée par la plaque support est ainsi renforcée par une ou plusieurs lattes, par exemple trois lattes, qui sont des pièces longues, plates, minces et étroites. Elles s'étendent transversalement entre ladite plaque support et la couche isolante, sans atteindre les bordures de la couche isolante, de façon à être enclavées à l'intérieur de la strate isolante. De manière intéressante, elles peuvent être munies d'une nervure s'élevant perpendiculairement à leur plan général, et adopter ainsi la forme d'un profilé avec une section en T. Le pied du T peut alors servir à caler la couche isolante lorsque celle-ci est constituée de plusieurs segments.

Les cloisons sont de préférence réalisées dans le même matériau que la couche isolante de la paroi arrière de l'enceinte, sans que cela soit impératif. Comme indiqué précédemment, elles sont implantées sur toute la périphérie de la strate isolante, et plus spécifiquement de la couche isolante avec laquelle elles sont solidaires. Elles constituent les parois latérales de l'enceinte, et s'étendent donc jusqu'à la paroi avant de l'enceinte, à savoir jusqu'à la vitre transparente. De manière intéressante, elles adoptent la forme de tasseaux, avec une forme longitudinale allongée régulière de section rectangulaire (pouvant être éventuellement carrée). Chaque tasseau réalise une des parois latérales et est abouté par ses extrémités avec les tasseaux des parois voisines. Un des petits côtés des tasseaux est au contact de la couche isolante, tandis que l'autre petit côté est au contact de la vitre. Le mode d'assemblage peut se faire par tout moyen, par exemple collage, jonction tenon-mortaise, ou autre, mais de manière particulièrement intéressante, les différents éléments seront solidarisés par serrage entre des mâchoires dont le cadre périphérique est pourvu.

Ainsi, selon une caractéristique du panneau solaire objet de l'invention, les cloisons peuvent être formées de quatre tasseaux de section rectangulaire associés par leurs extrémités, chacun ayant un premier petit côté placé en appui contre ladite strate isolante, en bordure de celle-ci, et un second petit côté associé de manière jointive avec la vitre transparente.

Différents moyens peuvent être utilisés pour maintenir la vitre transparente à une distance fixe prédéterminée de la strate isolante, tels que des cales disposées à intervalles, des taquets mobiles autour d'un axe pouvant être orientés de manière à bloquer la vitre en place, ou autre moyen connu d'une personne du métier. De manière originale, on peut prévoir que le second petit côté des cloisons comporte un décrochement pratiqué le long de leur arête intérieure, en d'autres termes une surface en retrait de la surface dudit petit côté et parallèle à celle-ci permettant de recevoir la vitre en appui. La vitre peut ensuite être fixée dans cette position en mettant à profit ici encore la structure du cadre périphérique et ses mâchoires de serrage.

Ainsi, selon un mode avantageux de réalisation de l'invention, le second petit côté des cloisons comporte un décrochement pratiqué en continu le long de leur arête intérieure, ledit décrochement recevant en appui une plage périmétrale de la vitre transparente.

De même, différents moyens peuvent être utilisés par une personne du métier pour maintenir l'absorbeur à une distance fixe prédéterminée de la strate isolante, mais avantageusement, les cloisons isolantes sont mises à contribution pour maintenir l'absorbeur en prise directe. A cet effet, selon un mode de réalisation préféré, les cloisons comportent une rainure continue parallèle au plan général du panneau, dans laquelle est insérée une plage périmétrale dudit absorbeur. Le liège se prête aisément à la taille d'une telle rainure, qui sera réalisée préalablement à l'assemblage des cloisons. Une plage large de quelques millimètres à un centimètre, courant sur tout le périmètre en bordure du feuillet absorbeur, suffit à maintenir celui-ci.

Le panneau solaire objet de la présente invention comporte un cadre rigide agencé en périphérie dudit panneau et entourant l'enceinte qui vient d'être décrite. Selon un mode de réalisation intéressant, le cadre coopère avec les pièces formant l'enceinte de manière à les maintenir solidaires entre elles par serrage. Il est conformé pour s'emboiter autour de l'enceinte, en prenant appui contre les parois latérales de l'enceinte ainsi que par des extensions dont il est muni, contre la marge des faces avant et arrière de celle-ci. Autrement dit, il adopte une section droite en forme d'étau dont les deux mâchoires, avant et arrière, compressent les pièces de l'enceinte et les maintiennent assemblées fixes les unes contre les autres. Cet assemblage est fait sans adjonction de colle, ni au niveau de la vitre ni au niveau du feuillet absorbeur, ce qui autorise des réparations en place sur le bâti sans avoir à démonter et à renvoyer le panneau en usine en cas de casse. Cela supprime aussi les temps de séchage lors de la fabrication.

Selon une caractéristique préférée du panneau solaire objet de la présente invention, le cadre rigide entourant l'enceinte peut ainsi comporter des extensions avant et arrière formant mâchoires qui surplombent respectivement la marge des parois avant et arrière de l'enceinte, les pièces de l'enceinte étant maintenues solidaires entre elles par la pression exercée par lesdites mâchoires.

Le cadre du panneau solaire selon l'invention peut être réalisé en différents matériaux, tels que du bois ou du métal, par exemple avec un profilé en aluminium. Il peut être commodément composé de deux éléments, à savoir un châssis de base complété par une parclose maintenant la vitre dans la feuillure de son support (ici le décrochement de la cloison de liège). Le châssis peut par exemple entourer les quatre parois latérales de l'enceinte et porter une extension arrière recouvrant la marge de la paroi arrière, tandis qu'une parclose, terminant l'assemblage du panneau par un clipsage élastique, porte une extension avant recouvrant la marge de la paroi avant. Les extensions avant et arrière peuvent commodément être recourbées à leur extrémité pour former un retour par l'intermédiaire duquel un pression sera appliquée aux parois avant et arrière pour obtenir le serrage de l'ensemble.

Ainsi, le cadre du panneau solaire objet de la présente invention est avantageusement un profilé en métal ou en bois formé i) d'un châssis ceinturant latéralement l'enceinte et comportant ladite extension arrière, et ii) d'une parclose fixée dans ledit profilé et comportant ladite extension avant, chacune desdites extensions avant et arrière étant munie d'un retour incurvé pour prendre appui sur ladite paroi avant ou arrière, respectivement. Les retours avant et arrière pourront être avantageusement équipés d'un joint d'étanchéité continu le long de la ligne de contact, apte à empêcher l'infiltration des eaux de pluie, à éviter les frottements indésirables et à absorber les vibrations.

Le panneau solaire aérothermique tel que décrit ci-dessus offre une solution inédite de haute performance, dont la fabrication est facilitée par rapport aux panneaux connus jusqu'à lors. En effet, l'assemblage des systèmes conventionnels nécessite plusieurs pièces de fixation supplémentaires pour maintenir entre eux l'absorbeur, le vitrage et un caisson formant le fond des panneaux. Des opérations de collage de la vitre suivies de périodes de séchage allongent significativement le processus. Au contraire, dans le panneau selon l'invention, le feuillet absorbeur est supporté directement par les cloisons isolantes qui servent aussi d'appui pour le vitrage, le tout étant monté dans un cadre, sans jonction vissée ni collée. Dès lors, on réalise un gain de temps appréciable. La performance thermique du panneau selon l'invention est également élevée grâce à l'emploi de liège en tant qu'isolant de la paroi arrière mais aussi des parois latérales de l'enceinte de captage de l'énergie.

Le rôle premier du panneau solaire aérothermique selon l'invention étant d'apporter de l'air chaud dans un bâtiment, il convient d'organiser la circulation de l'air de l'atmosphère extérieure à travers l'enceinte, puis vers l'espace intérieur du bâtiment. C'est pourquoi, selon un premier mode de réalisation de l'invention, ledit panneau solaire comprend des moyens autorisant la circulation de l'air à travers le panneau, depuis le milieu extérieur vers l'intérieur du bâtiment, comprenant :

- un orifice d'entrée d'air pratiqué dans la partie latérale inférieure du panneau à travers le cadre et la cloison adjacente de l'enceinte, débouchant dans l'espace situé entre la strate isolante et l'absorbeur, constituant une chambre de circulation, et
- un conduit de sortie d'air implanté dans un orifice pratiqué dans la partie supérieure de la paroi arrière, menant à l'intérieur du bâtiment.

Le problème de la condensation se formant dans la chambre de captage entre la vitre et le feuillet absorbeur est bien connu. Il peut être résolu ici de manière simple, sans recourir à des montages hermétiques complexes. Pour cela, il est prévu que la chambre de captage soit en communication avec l'extérieur, de façon que l'humidité ne s'y accumule pas, ou au besoin, que l'eau de condensation puisse s'écouler par gravité.

Il peut donc être prévu, selon l'invention, que l'orifice d'entrée d'air soit pratiqué débouchant en partie dans l'espace situé entre la vitre transparente et l'absorbeur, constituant une chambre de captage.

Selon une variante d'exécution, la circulation d'air peut se faire à partir de l'arrière du panneau. Dans ce cas, le panneau solaire selon l'invention peut comprendre des moyens autorisant la circulation de l'air à travers le panneau, depuis le milieu extérieur vers l'intérieur du bâtiment, comprenant :

- un orifice d'entrée d'air pratiqué en partie inférieure de la paroi arrière de l'enceinte à travers la strate isolante, débouchant dans ladite chambre de circulation, et
- un conduit de sortie d'air implanté dans un orifice de sortie pratiqué dans la partie supérieure de la paroi arrière, menant à l'intérieur du bâtiment.

Pour éviter la condensation, comme expliqué précédemment, on peut prévoir que l'absorbeur comporte au moins une perforation dans sa partie inférieure, autorisant une circulation d'air de la chambre de circulation vers la chambre de captage.

Par ailleurs, il est apparu que l'air se trouvant dans la chambre de captage s'échauffait au moins autant que celui de la chambre de circulation, avec l'inconvénient d'une déperdition thermique par l'avant du panneau. Ce phénomène bien connu trouve une solution originale par un mode de réalisation particulier de l'invention, dans lequel on organise une circulation de l'air à travers la chambre de captage. Pour cela, on pratique une ou plusieurs perforations, pouvant être réalisées par perçage ou poinçonnage, dans le feuillet absorbeur, en position haute, de façon à permettre un passage d'air de la chambre de captage vers la chambre de circulation. Les perforations peuvent avantageusement être situées dans une zone à proximité du conduit de sortie de l'air, de façon à favoriser l'aspiration et le transfert de l'air déjà chaud directement dans le bâtiment. Le flux d'air pénétrant dans l'enceinte qui est dévié vers la chambre de captage doit rester modéré par rapport au flux principal passant par la chambre de circulation. Il peut être de l'ordre de 5% à 15%, le réglage étant obtenu par le nombre de perforations et leur dimension. Par exemple, on peut pratiquer de deux à cinq perforations de diamètres identiques ou différents, pouvant aller de 1 cm à 5 cm.

Ainsi, dans le panneau solaire selon l'invention, l'absorbeur peut comporter au moins une perforation dans sa partie supérieure, autorisant une circulation d'air de la chambre de captage vers la chambre de circulation avec un débit proportionnel au nombre de perforations et à leur taille.

Le panneau solaire à air qui vient d'être décrit peut être de type passif, c'est-à-dire utiliser la convection naturelle : l'air chaud monte naturellement et crée un déplacement d'air. Il peut aussi forcer la circulation de l'air par une ventilation mécanique. Le panneau solaire selon l'invention sera de préférence équipé d'un ventilateur, auquel cas une alimentation électrique sera prévue, par connexion au réseau ou à l'aide d'un capteur photovoltaïque associé. Sa mise en marche peut se faire à la demande, via une interface manipulée par un utilisateur. Il peut aussi être équipé d'un module de gestion automatisé, pouvant être paramétré par un utilisateur.

Selon une caractéristique intéressante, le panneau solaire selon l'invention comprend en outre :

- un ventilateur apte à entraîner l'air de l'orifice d'entrée vers le conduit de sortie à travers l'enceinte,
- optionnellement, des moyens d'alimentation électrique dudit ventilateur,
- un module électronique de gestion et de pilotage,
- une interface utilisateur.

Il est avantageux que la ventilation soit mise en route lorsque la différence de températures entre l'intérieur et l'extérieur le justifie. On note que si la raison d'être première d'un panneau solaire est de contribuer au chauffage d'un local, il peut très bien aussi travailler pour le rafraichissement dudit local, lorsque l'air traversant la panneau est suffisamment froid. Des sondes de température peuvent être installées dans les sites adéquats, en général dans l'enceinte du panneau et dans une pièce du bâtiment, et reliées au module électronique.

C'est pourquoi, le panneau solaire selon l'invention peut comprendre en outre deux sondes de température configurées pour relever périodiquement la température régnant respectivement dans l'enceinte du panneau et dans le bâtiment équipé, le module électronique étant configuré pour recevoir et comparer les données de température fournies par lesdites sondes, et

- si la température dans l'enceinte est supérieure à celle du bâtiment d'une valeur de consigne prédéterminée, actionner le ventilateur pour insuffler de l'air chaud,
- si la température dans l'enceinte est inférieure à celle du bâtiment d'une valeur de consigne prédéterminée, actionner le ventilateur pour insuffler de l'air frais.

Les panneaux solaires aérothermiques sont de structure simple et comportent peu de pièces d'usure. Cependant leur intégration en façade est souvent jugée inesthétique par les utilisateurs. Il est alors souvent proposé de les intégrer directement dans le bardage ou dans l'isolation extérieure du bâtiment. Mais ce de fait, les possibilités d'accès et d'intervention sont limitées, ce qui peut poser des problèmes en cas de défaillance d'un des éléments du panneau. Ce problème est accentué lorsque les panneaux sont installés en hauteur.

Pour remédier à cet inconvénient, la présente invention propose un système regroupant tous les éléments à faible durée de vie directement dans un dispositif de soufflage. Ainsi, les parties actives et/ou mobiles sujettes à l'usure (ventilateur, électronique, sondes de température) sont facilement accessibles pour l'entretien ou les réparations, tandis que les parties inertes et peu fragiles (cadre, isolant, absorbeur, vitre) sont à l'extérieur du bâti.

Le panneau solaire qui vient d'être décrit permet d'obtenir une performance énergétique élevée, bien qu'il soit de faible épaisseur, ce qui le rend plus esthétique. Il est de ce fait bien accepté par les utilisateurs potentiels, d'autant qu'il est d'un entretien très simple, puisque aucun fluide liquide ou batterie n'est à maintenir en état.

La présente invention sera mieux comprise et des détails en relevant apparaîtront, à la lumière de la description qui va être faite de modes de réalisation, en relation avec les figures annexées.

Fig.1 est une vue générale d'un panneau solaire à air selon l'invention installé sur la façade d'un bâtiment.

Fig.2 est une vue schématique de face d'un panneau solaire à air selon l'invention.

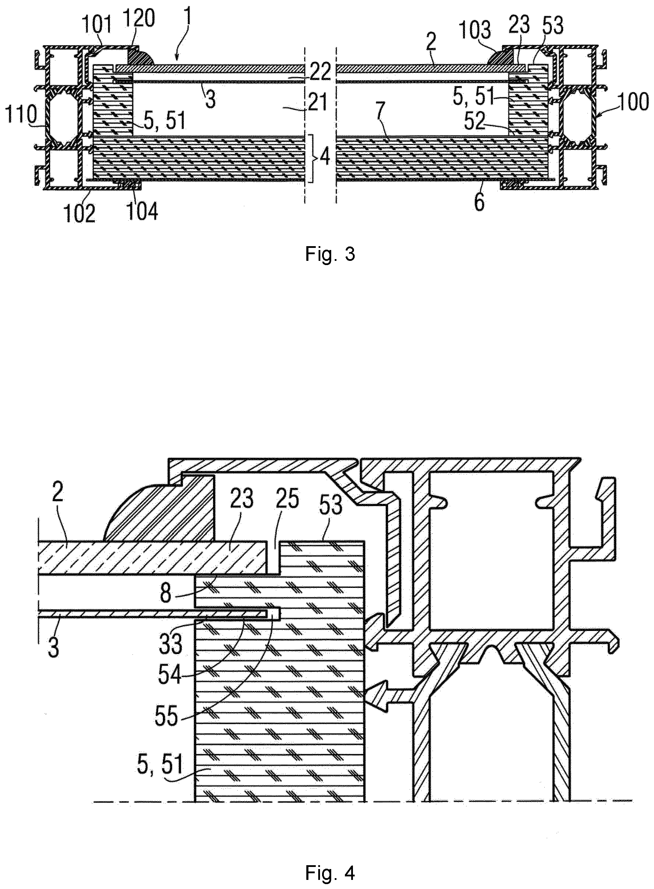

Fig.3 représente un panneau solaire à air selon l'invention, vu en coupe transversale.

Fig.4 montre un détail du même panneau solaire.

Fig.5a est une vue de face d'un premier absorbeur équipant un panneau selon l'invention.

Fig.5b est une vue de face d'un second absorbeur équipant un panneau selon l'invention.

Fig.6 est une vue de dessous du cadre d'un panneau selon l'invention.

## EXEMPLE 1 : Présentation générale d'un bâtiment équipé d'un panneau solaire

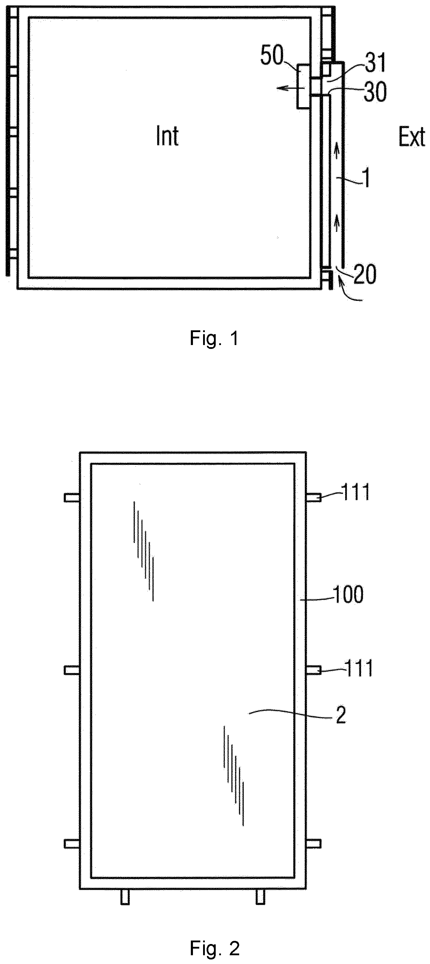

Les panneaux solaires à air selon l'invention sont destinés à être installés en façade ou en toiture. Ils chauffent et secondairement ventilent des habitations ou des locaux d'activités. Comme représenté à la Fig.1, la circulation de l'air se fait à travers le panneau, depuis le milieu extérieur Ext vers l'intérieur Int du bâtiment, grâce à un orifice d'entrée 20 d'air ménagé dans la partie latérale inférieure du panneau, ou à l'arrière de celui-ci, et débouchant dans une chambre de circulation 21. L'orifice d'entrée d'air est utilement équipé d'un grillage anti-insectes. L'air réchauffé passe ensuite par un conduit de sortie 30 d'air implanté dans un orifice de sortie 31 pratiqué dans la partie supérieure de la paroi arrière, menant à l'intérieur du bâtiment.

Les panneaux peuvent être montés en façade en surimpression, intégrés dans une isolation par l'extérieur ou dans un bardage. En toiture, l'installation se fait en surimpression à l'aide de deux ou trois rails, de manière connue en soi. Ils peuvent être fixés par tout moyen disponible. Selon le schéma présenté en Fig.2, un panneau est fixé par son cadre 100 à l'aide de huit équerres 111 en acier galvanisé. Les points de fixation peuvent être ajustés le long du cadre 100, et également sur le mur grâce à des trous oblongs sur les équerres.

## EXEMPLE 2 : Structure et agencement d'un panneau solaire aérothermique

Le modèle de panneau illustré ci-après est rectangulaire, dimensionné comme suit, étant entendu que toutes les valeurs sont données à titre d'exemple uniquement et peuvent être modifiées sans sortir du cadre de l'invention.

Dimensions totales : 2000 mm x 1000 mm x 73 mm
Surface totale : 2 m$^2$
Surface de captation : 1,9 m$^2$
Masse totale : 40 kg

La structure d'un tel panneau, représenté aux figures Fig.1 et Fig.2, comprend un cadre 100, entourant une enceinte 1. L'enceinte 1 comporte à l'arrière une strate isolante 4 qui est munie de cloisons 5 constituant les parois latérales de l'enceinte 1. La strate isolante 4 est composée du côté extérieur d'une plaque 6 en PVC blanc d'une épaisseur de 1 mm, sur laquelle repose une couche 7 isolante en liège d'une épaisseur de 20 mm. Elle intègre trois lattes en aluminium, profilées en T, d'un millimètre d'épaisseur (non représentées), renforçant la rigidité de l'enceinte 1 et le maintien de la couche 7 isolante composées dans ce cas de quatre segments juxtaposés.

La couche 7 isolante et les cloisons 5 sont réalisées à partir de plaques de liège naturel aggloméré découpées aux dimensions voulues. Les plaques de liège peuvent provenir de déchets de liège et/ou de liège concassé en particules de tailles diverses, ayant généralement une granulométrie de quelques millimètres à un centimètre, agglomérés naturellement par la subérine présente dans le liège. Par exemple, on peut utiliser un liège broyé ayant une répartition granulométrique comprise à 98,5 % entre 2 mm et 14 mm. Les plaques utilisées sont conformes aux exigences fixées par la réglementation communautaire, repérable par le marquage CE, pour leurs performances au niveau de la résistance thermique, de la conductivité thermique, de la réaction au feu, de l'absorption d'eau, de la résistance à la diffusion de vapeur, à la compression et à la flexion, ainsi que de la stabilité dimensionnelle. En particulier, elles ont une résistance thermique de 0,444 m$^2$.K/W.

Les cloisons 5 sont réalisées par découpage de quatre tasseaux 51 en liège aggloméré, de section rectangulaire. Ils ont une épaisseur de 20 mm pour une hauteur de 28 mm et sont aboutés entre eux par leurs extrémités. Un premier petit côté 52 repose sur le pourtour de la couche 7 isolante. Le second petit côté 53 des tasseaux 51 comporte un décrochement 8, courant tout le long de l'arête intérieure et offrant une surface d'appui à une vitre 2, en verre trempé, d'épaisseur pouvant aller de 3 mm à 10 mm, mais comprise généralement entre 3,5 mm et 6 mm. La vitre 2 repose sur tout son pourtour, par une plage périmétrale 23 de 5 mm à 15 mm, ici de 9 mm, sur la surface d'appui formée par le décrochement 8. Un espace de dilatation 25 d'environ 2 mm est laissé libre au fond du décrochement 8.

Les tasseaux 51 formant les cloisons 5 comportent également une rainure 54, continue sur tout le périmètre et parallèle au plan général du panneau. Cette rainure 54 maintient un absorbeur 3, se présentant comme un feuillet en aluminium laqué noir, de 1 mm d'épaisseur (ou 0,5 mm s'il est traité avec un revêtement sélectif, de type Mirotherm commercialisé par la société Alanod). La rainure 54 est profonde de 10 mm, de sorte qu'elle entaille les tasseaux 51 à la moitié de leur épaisseur, ce qui permet de ne pas fragiliser outre mesure les cloisons 5 et de maintenir correctement le feuillet absorbeur 3. Sa hauteur est ici de 1,5 mm, légèrement plus élevée que l'épaisseur de l'absorbeur 3, facilitant l'introduction d'une plage périmétrale (33) de celui-ci. Un espace de dilatation 55 d'environ 2 mm est laissé libre au fond de la rainure 54.

L'enceinte 1 ainsi constituée comporte une chambre de circulation 21, délimitée par la couche 7 isolante et le feuillet absorbeur 8, distants de 28 mm et une chambre de captage 22 entre le feuillet absorbeur 8 et la vitre 2 transparente, distants de 5 mm. On a ainsi une enceinte 1 dont l'épaisseur, hors cadre, n'excède pas 60 mm.

Idéalement, on insère un film isolant vis-à-vis du rayonnement infra-rouge, par exemple un film de PET (polyéthylène téréphtalate), entre la couche 7 thermiquement isolante et la plaque 6 support. On limite ainsi les pertes caloriques par rayonnement à travers le fond de l'enceinte 1. A noter que ceci n'a aucun impact sur le transfert de chaleur par conduction qui est un phénomène distinct.

Le cadre 100, comme représenté aux figures, entoure les quatre parois de l'enceinte 1 sur tout son périmètre, et adopte un profil droit en forme d'étau, avec deux mâchoires enserrant l'enceinte 1, à l'avant et à l'arrière. Une mâchoire est constituée par une extension avant 101, surplombant la marge de la paroi avant de l'enceinte 1, dont l'extrémité comporte un retour incurvé, prenant appui sur ladite paroi avant, par l'intermédiaire d'un joint avant 103. Le joint avant 103 assure étanchéité et résilience en évitant le frottement entre le métal de l'extension avant 101 et le verre de la vitre 2. L'autre mâchoire est constituée par une extension arrière 102, surplombant la marge de la paroi arrière de l'enceinte 1, dont l'extrémité comporte un retour incurvé, prenant appui sur ladite paroi arrière. Le retour arrière incorpore un joint arrière 104 assurant l'étanchéité entre ladite extension arrière 102 et la plaque 6 en PVC. De la sorte, les pièces de l'enceinte 1 sont maintenues solidaires entre elles par la pression exercée par lesdites extensions avant et arrière.

En pratique, le cadre est formé d'un châssis 110, préfabriqué en atelier, ceinturant latéralement l'enceinte 1 et comportant l'extension arrière 102. Pour l'assemblage du panneau, on dispose successivement dans le cadre 100 posé à plat horizontalement sur un plateau, les joint arrière 104, la plaque 6 en PVC, la couche 7 isolante, les cloisons 5 maintenant le feuillet absorbeur 3, puis la vitre 2 et le joint avant 103. On adjoint alors une parclose 120 comportant l'extension avant 101, qu'on fixe par clipsage sur le profilé.

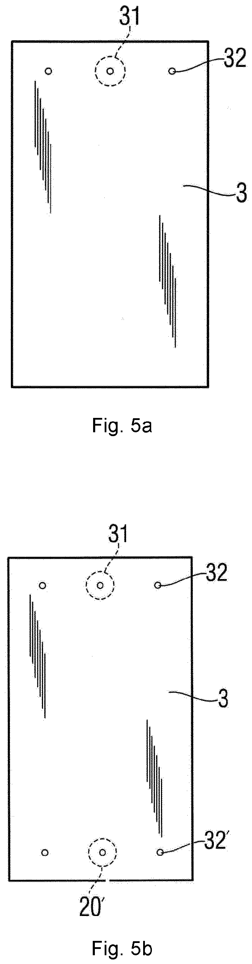

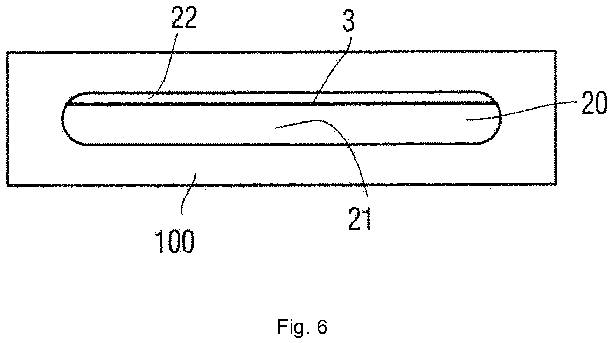

Selon une première variante, la circulation de l'air dans l'enceinte 1 se fait à partir d'un orifice d'entrée 20 d'air ménagé dans la partie latérale inférieure du cadre 100 et traversant la cloison 5. Comme représenté en figures Fig.5a et Fig.6, l'orifice d'entrée 20 d'air ouvre dans la chambre de circulation 21 et en partie dans la chambre de captage 22. Dans le feuillet absorbeur 3, sont pratiquées trois perforations 32, en partie supérieure au niveau de l'orifice de sortie 31 de l'air. De la sorte la plus grande partie de l'air chemine dans la chambre de circulation 21 et une fraction du flux passe dans la chambre de captage 22.

Selon une deuxième variante, la circulation de l'air dans l'enceinte 1 se fait depuis un orifice d'entrée 20' d'air pratiqué en partie inférieure de la paroi arrière de l'enceinte 1. L'orifice 20' traverse la strate isolante 4 et débouchant dans la chambre de circulation 21 en position basse. Pour permettre la circulation de l'air de la chambre de circulation 21 vers la chambre de captage 22, comme représenté en figures Fig.5b, l'absorbeur 3 est muni de trois perforations 32' dans sa partie inférieure.

Dans les deux cas, l'air circule jusqu'à un orifice de sortie 31 pratiqué dans la partie supérieure de la paroi arrière, et s'écoule par le conduit de sortie 30, d'un diamètre de 125 mm, traversant la strate isolante 4.

Le panneau tel que décrit ci-dessus peut fonctionner comme un système passif, mais il peut aussi comporter un ventilateur apte à propulser l'air de l'orifice d'entrée 20 vers le conduit de sortie 30 à travers les deux chambres de l'enceinte 1. Dans ce cas, il est équipé d'un dispositif de soufflage comprenant ledit ventilateur, un module électronique de gestion et de pilotage, deux sondes de températures (par exemple des thermistances), ainsi qu'une interface utilisateur. L'alimentation électrique est obtenue soit par un adaptateur convertissant le courant du secteur de 220 V en 12 V-1A conforme à la norme CE ; soit à l'aide d'un panneau photovoltaïque autonome 12V-20W également à la norme CE. Une des sondes de température est déportée dans un boitier en matière plastique avec une alimentation par pile, l'autre est placée dans l'enceinte et alimentée directement par le module électronique.

Le module électronique comprend un microcontrôleur qui est soumis à un superviseur de tension qui démarre le microcontrôleur dès que la tension d'alimentation actionnant également le ventilateur dépasse 3,08 V. Le microcontrôleur alimente le moteur du ventilateur uniquement si la tension est dans sa plage de fonctionnement (tolérance constructeur).

**EXEMPLE 3 : Dispositif de ventilation intégré**

Dans un mode de réalisation original du panneau solaire aérothermique, le ventilateur, le module électronique et les sondes de température sont intégrés dans un dispositif de soufflage. Celui-ci se présente sous la forme d'un boitier 50 associé au conduit de sortie 30 dans lequel se trouvent le ventilateur, les deux thermistances si installation en façade ou via un câble si installation dans les combles et le module électronique d'une épaisseur de 1,6 mm, maintenu par vissage dans ledit boitier. Celui-ci s'installe directement dans le conduit de sortie 30 de l'air, de la même manière que la bouche d'extraction d'une VMC (ventilation mécanique contrôlée). De ce fait, il est aisément accessible et démontable, ce qui permet un entretien facile et rapide du ventilateur, des capteurs de températures et de l'électronique.

Le ventilateur est choisi ici avec une puissance de 8 W, apte à générer un débit d'air de 222 m³/h. La ventilation est gérée en fonction du mode sélectionné par l'utilisateur via une interface, disponible à partir d'une télécommande ou depuis un navigateur internet.

**EXEMPLE 4 : Fonctionnement du panneau solaire aérothermique**

Le panneau décrit ci-dessus est installé sur une façade ou en toiture, de sorte à être orienté au maximum face au sud, en évitant les ombres portées qui pourraient réduire ses performances. Le soleil chauffe la surface du vitrage qui est en contact avec l'air dans l'enceinte du panneau. Dès que la température de l'air dans l'enceinte est supérieure à celle de l'habitation, la ventilation s'enclenche. Même lorsque la température extérieure est froide, un échauffement se produit sous la vitre dès lors qu'elle est traversée par le rayonnement infra-rouge du soleil, les nombreuses journées froides mais ensoleillées apporteront de la chaleur par aérothermie, et donc une énergie renouvelable et gratuite. Les frais énergétiques (électricité, gaz, fioul, bois, ...) en sont réduits d'autant. En été, le panneau permet de rafraichir les locaux grâce à une sur-ventilation nocturne.

Le ventilateur est entrainé à une vitesse variable par le moteur intégré au dispositif. Il est ici dimensionné pour déplacer un volume d'air allant de 30 m³/h en vitesse minimum jusqu'à 160 m³/h en vitesse maximum. La vitesse du ventilateur est régulée en fonction de l'écart entre la température intérieure du bâtiment que l'on souhaite chauffer ou aérer et la température à l'intérieur de l'enceinte, mesurés par des capteurs, selon l'équation :

$$V = (Tp - Ti) \times G$$

dans laquelle

- V représente la vitesse du ventilateur, exprimée % de la puissance du moteur à mettre en oeuvre,
- Tp est la température de l'air dans l'enceinte du panneau, en °C,
- Ti est la température de l'air à l'intérieur du local, en °C, et
- G est un paramètre appelé gain, prédéfini par le constructeur à l'issue d'une série de tests expérimentaux, qui résulte d'un compromis entre bruit, optimisation du rendement et vitesse de ventilation.

Deux régimes de fonctionnement principaux ont ainsi été définis, l'un correspondant à une situation où on souhaite chauffer un local, l'autre où l'aération est privilégiée. Sur cette base, le module électronique a été paramétré de manière à offrir un régime hiver et d'un régime été, selon les modalités suivantes, données à titre d'exemple.

- En mode hiver, la ventilation démarre dès que la température du panneau Tp est supérieure de 3°C à la température intérieure Ti du local. La ventilation s'arrête si la différence n'est plus que de 1°C. Le gain a été fixé à 100. Le débit d'air maximum est atteint quand la différence de température est de 30°C.
- En mode été, la ventilation démarre quand la température du panneau Tp est inférieure de 3°C à la température intérieure Ti. La ventilation s'arrête si la différence n'est plus que de 1°C. Le gain est ici fixé à 200. Le débit maximum est atteint quand la différence de température est de 15°C.

D'autres options peuvent être utilisées, par exemple un mode silencieux dans lequel la vitesse du ventilateur est limitée ; un mode rapide dans lequel le ventilateur atteint sa vitesse maximale en 60 secondes ; un mode passif, dans lequel le ventilateur est arrêté quelles que soient les températures relevées.

Le système est ainsi totalement autonome et permet de réchauffer un local même inoccupé. En particulier, une résidence secondaire sera maintenue à une température agréable et bien ventilée même en l'absence de ses occupants. Dans les zones les plus froides, par exemple dans les villages d'altitude, le local sera préservé du gel hivernal, souvent fatal pour les équipements et les tuyauteries.

**EXEMPLE 5 : Performances thermiques**

Les tests réalisés avec un panneau de 2 m², tel que décrit aux exemples précédents ont mis en évidence des performances très satisfaisantes.

Par exemple, durant une séquence d'ensoleillement automnale, la température Ti dans le local était le matin de 24°C. Dès que la température Tp dans l'enceinte a atteint 27°C, le ventilateur s'est mis en route. Il a fonctionné de 10h30 à 16h00 avec une vitesse moyenne insufflant 120 m³/h. La température Tp est arrivée rapidement à 46°C, apportant dans le local de l'air à une température de 22°C plus chaude que l'air ambiant. Avec un ensoleillement moyen de 600 W/m² pendant 6 heures, le panneau a fourni 4,95 kW.h.

**Revendications**

1. Panneau solaire aérothermique plan doté de moyens de fixation à un bâtiment à chauffer, comportant un cadre (100) rigide agencé en périphérie dudit panneau et entourant une enceinte (1) comprenant successivement, de l'avant vers l'arrière et à distance les unes des autres, les pièces consistant en :

   - une vitre (2) en matériau transparent à la lumière formant une paroi avant,
   - un absorbeur (3) calorique formé d'un feuillet métallique,
   - une strate isolante (4) formant une paroi arrière,

   le panneau étant *caractérisé en ce que* l'enceinte (1) est dotée de parois latérales formées par des cloisons (5) s'élevant depuis le pourtour de la strate isolante (4) avec laquelle elles sont solidaires, lesdites cloisons (5) comprenant des moyens de maintien de la vitre (2) transparente et de l'absorbeur (3) à une distance fixe prédéterminée de la strate isolante (4), et ladite strate isolante et lesdites cloisons étant constituées d'au moins un matériau isolant d'origine végétale.

2. Panneau solaire selon la revendication 1, *caractérisé en ce que* ledit au moins un matériau isolant de ladite strate isolante (4) et desdites cloisons (5) est choisi parmi du liège naturel, du liège expansé, ou un assemblage de ceux-ci.

3. Panneau solaire selon la revendication 1 ou 2, *caractérisé en ce que* la strate isolante (4) comprend une plaque (6) support rigide contre laquelle prend appui une couche (7) dudit matériau isolant.

4. Panneau solaire selon la revendication précédente, *caractérisé en ce que* la strate isolante (4) comprend en outre au moins une latte de renfort placée entre la plaque (6) et ladite couche (7) de matériau isolant.

5. Panneau solaire selon l'une des revendications précédentes, *caractérisé en ce que* les cloisons (5) sont formées de quatre tasseaux (51) de section rectangulaire associés par leurs extrémités, chacun ayant un premier petit côté (52) placé en appui contre ladite strate isolante (4), en bordure de celle-ci, et un second petit côté (53) associé de manière jointive avec la vitre (2) transparente.

6. Panneau solaire selon la revendication précédente, *caractérisé en ce que* le second petit côté (53) des cloisons (5) comporte un décrochement (8) pratiqué en continu le long de leur arête intérieure, ledit décrochement recevant en appui une plage périmétrale (21) de la vitre (2) transparente.

7. 9- Panneau solaire selon l'une des revendications précédentes, *caractérisé en ce que* les cloisons (5) comportent une rainure (54) continue parallèle au plan général du panneau, dans laquelle est insérée une plage périmétrale (33) dudit absorbeur (3).

8. Panneau solaire selon l'une quelconque des revendications précédentes, *caractérisé en ce que* le cadre (100) rigide entourant l'enceinte (1) comporte des extensions avant et arrière (101, 102) formant mâchoires qui surplombent respectivement la marge des parois avant et arrière de l'enceinte (1), les pièces de ladite enceinte étant maintenues solidaires entre elles par la pression exercée par lesdites mâchoires.

9. Panneau solaire selon l'une quelconque des revendications précédentes, *caractérisé en ce qu'*il comprend des moyens autorisant la circulation de l'air à travers le panneau, depuis le milieu extérieur vers l'intérieur du bâtiment, comprenant :

   - un orifice d'entrée (20) d'air pratiqué dans la partie latérale inférieure du panneau à travers le cadre (100) et la cloison (5) adjacente de l'enceinte (1), débouchant dans l'espace situé entre la strate isolante (4) et l'absorbeur (3), et constituant une chambre de circulation (21), et
   - un conduit de sortie (30) d'air implanté dans un orifice de sortie (31) pratiqué dans la partie supérieure de la paroi arrière, menant à l'intérieur du bâtiment.

10. Panneau solaire selon la revendication précédente, *caractérisé en ce que* l'orifice d'entrée (20) d'air est pratiqué débouchant en outre en partie dans l'espace situé entre la vitre (2) transparente et l'absorbeur (3) constituant une chambre de captage (22).

11. Panneau solaire selon l'une quelconque des revendications 1 à 8, *caractérisé en ce qu'*il comprend des moyens autorisant la circulation de l'air à travers le panneau, depuis le milieu extérieur vers l'intérieur du bâtiment, comprenant :

   - un orifice d'entrée (20') d'air pratiqué en partie inférieure de la paroi arrière de l'enceinte (1) à travers la strate isolante (4), débouchant dans ladite chambre de circulation (21), et
- un conduit de sortie (30) d'air implanté dans un orifice de sortie (31) pratiqué dans la partie supérieure de la paroi arrière, menant à l'intérieur du bâtiment.

12. Panneau solaire selon la revendication précédente, *caractérisé en ce que* l'absorbeur (3) comporte au moins une perforation (32') dans sa partie inférieure, autorisant une circulation d'air de la chambre de circulation (21) vers la chambre de captage (22).

13. Panneau solaire selon l'une des revendications 10 ou 12, *caractérisé en ce que* l'absorbeur (3) comporte au moins une perforation (32) dans sa partie supérieure, autorisant une circulation d'air de la chambre de captage (22) vers la chambre de circulation (21) avec un débit proportionnel au nombre de perforations (32) et à leur taille.

14. Panneau solaire selon l'une quelconque des revendications précédentes, *caractérisé en ce qu'*il comprend en outre :

    - un ventilateur apte à entrainer l'air de l'orifice d'entrée (20) vers le conduit de sortie (30) à travers l'enceinte (1),
    - optionnellement des moyens d'alimentation électrique dudit ventilateur,
    - un module électronique de gestion et de pilotage,
    - une interface utilisateur.

15. Panneau solaire selon la revendication précédente, *caractérisé en ce qu'*il comprend en outre deux sondes de température configurées pour relever périodiquement la température régnant respectivement dans l'enceinte (1) du panneau et dans le bâtiment équipé, le module électronique étant configuré pour recevoir et comparer les données de température fournies par lesdites sondes, et

    - si la température dans l'enceinte est supérieure à celle du bâtiment d'une valeur de consigne prédéterminée, actionner le ventilateur pour insuffler de l'air chaud,
    - si la température dans l'enceinte est inférieure à celle du bâtiment d'une valeur de consigne prédéterminée, actionner le ventilateur pour insuffler de l'air frais.

Fig. 1

Fig. 2

Fig. 3

Fig. 4

Fig. 5a

Fig. 5b

Fig. 6

**Europäisches Patentamt**

**European Patent Office**

**Office européen des brevets**

# RAPPORT DE RECHERCHE EUROPEENNE

Numéro de la demande

**EP 23 19 9233**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2018/224158 A1 (PLESNIAK ADAM PETER [US]) 9 août 2018 (2018-08-09) * alinéa [0037] – alinéa [0043]; figures 3-5 * * alinéas [0042], [0039] * * figure 5 * * alinéa [0040] – alinéa [0041]; figure 3 * | 1-15 | INV. F24S10/50 F24S25/20 F24S50/40 F24S70/60 F24S80/40 F24S80/58 F24S80/65 F24S80/00 |
| Y | US 4 215 675 A (EMBREE JOHN M [US]) 5 août 1980 (1980-08-05) * colonne 8, ligne 67 – colonne 9, ligne 8; figures 1,2 * | 1-5,8-14 | |
| Y | US 4 132 217 A (ROM FRANK E ET AL) 2 janvier 1979 (1979-01-02) * colonne 4, ligne 48 – ligne 54; figure 5 * * colonne 4, ligne 3 – ligne 17; figures 2,5 * | 6,7 | |
| Y | US 2015/184893 A1 (SYLVAN JOHN E [US]) 2 juillet 2015 (2015-07-02) * alinéa [0045]; figure 11 * | 15 | DOMAINES TECHNIQUES RECHERCHES (IPC) F24S |
| A | US 3 399 664 A (SUHAY FRANK L) 3 septembre 1968 (1968-09-03) * colonne 1, ligne 66 – colonne 2, ligne 55; figure 3 * | 1-15 | |
| A | US 2011/269087 A1 (DUCHATEAU GARY L [US]) 3 novembre 2011 (2011-11-03) * alinéa [0026]; figure 2 * | 1-15 | |
| A | FR 2 787 868 A1 (NOCERA PIERRE JEAN [FR]) 30 juin 2000 (2000-06-30) * figure 3 * | 1-15 | |

-/--

Le présent rapport a été établi pour toutes les revendications

| Lieu de la recherche | Date d'achèvement de la recherche | Examinateur |
|---|---|---|
| La Haye | 2 février 2024 | Mendão, João |

EPO FORM 1503 03.82 (P04C02)

Europäisches
Patentamt

European
Patent Office

Office européen
des brevets

# RAPPORT DE RECHERCHE EUROPEENNE

Numéro de la demande

**EP 23 19 9233**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | DE 26 36 641 A1 (MESSERSCHMITT BOELKOW BLOHM) 16 février 1978 (1978-02-16) * figure 2 * ----- | 1-15 | |
| A | WO 01/69689 A1 (ROTH MAX [CH]) 20 septembre 2001 (2001-09-20) * figures 4,5 * ----- | 1-15 | |
| A | GB 2 147 407 A (JANSON GOESTA) 9 mai 1985 (1985-05-09) * figure 2 * ----- | 1-15 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| La Haye | 2 février 2024 | Mendão, João |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

                      .......................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 19 9233

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-02-2024

| Document brevet cité au rapport de recherche | Date de publication | Membre(s) de la famille de brevet(s) | Date de publication |
|---|---|---|---|
| US 2018224158 A1 | 09-08-2018 | AUCUN | |
| US 4215675 A | 05-08-1980 | ES 478587 A1 | 16-06-1979 |
| | | US 4215675 A | 05-08-1980 |
| US 4132217 A | 02-01-1979 | AUCUN | |
| US 2015184893 A1 | 02-07-2015 | AUCUN | |
| US 3399664 A | 03-09-1968 | AUCUN | |
| US 2011269087 A1 | 03-11-2011 | AUCUN | |
| FR 2787868 A1 | 30-06-2000 | AUCUN | |
| DE 2636641 A1 | 16-02-1978 | AR 231021 A1 | 31-08-1984 |
| | | BR 7705300 A | 04-07-1978 |
| | | DE 2636641 A1 | 16-02-1978 |
| | | DK 360777 A | 14-02-1978 |
| | | ES 461593 A1 | 16-07-1978 |
| | | FR 2361613 A1 | 10-03-1978 |
| | | IT 1085736 B | 28-05-1985 |
| | | NL 7708484 A | 15-02-1978 |
| | | PT 66840 A | 01-08-1977 |
| | | ZA 774163 B | 30-05-1978 |
| WO 0169689 A1 | 20-09-2001 | AU 4039501 A | 24-09-2001 |
| | | WO 0169689 A1 | 20-09-2001 |
| GB 2147407 A | 09-05-1985 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2865269
- FR 2975759
- FR 3098572
- FR 2908870